# EUROPÄISCHE PATENTSCHRIFT

(11) **EP 2 566 797 B1**
(45) Veröffentlichungstag und Bekanntmachung des Hinweises auf die Patenterteilung: **01.04.2015**
(21) Anmeldenummer: 11718058.8
(22) Anmeldetag: 03.05.2011
(51) Int. Cl.: B65G 51/03

(54) **EINRICHTUNG ZUR AUFRECHTEN FÖRDERUNG EINES PREFORMS**
INSTALLATION FOR THE UPRIGHT TRANSPORT OF A PREFORM
INSTALLATION POUR LE TRANSPORT VERTICAL D'UNE PREFORME

(30) Priorität: 03.05.2010 DE 102010028500
(43) Veröffentlichungstag der Anmeldung: 13.03.2013
(73) Patentinhaber: Induflex Robert Morgan e.K., 27337 Blender (DE)
(72) Erfinder: MORGAN, Robert, 27337 Blender (DE)
(74) Vertreter: Eisenführ Speiser
(86) Internationale Anmeldenummer: PCT/EP2011/057046
(87) Internationale Veröffentlichungsnummer: WO 2011/138321

(56) Entgegenhaltungen:
- EP-A2- 0 344 417
- WO-A2-2005/005291
- FR-A- 2 784 975
- FR-A1- 2 768 417
- US-A- 5 738 467
- US-A- 5 820 306
- US-B1- 6 190 094

## Beschreibung

Die Erfindung betrifft ein Fördersystem zum Transport eines Preforms, das als Ausgangsform für ein daraus erzeugbares Behältnis dienen kann.

Preforms sind Vorprodukte einer Kunststoffflasche. Systeme für solche Flaschen sind aus der WO 2005/005291, der US 5,738,467, der FR 2784975, der US 6,190,094, der US - 5,820,306 sowie der FR 2768417 bekannt. -

Solche Preforms werden in eine Abfülleinrichtung eines Getränkes in die Abfülllinie eingeführt und aus den Preforms werden dann innerhalb der Abfülllinie durch entsprechend bekannte Werkzeuge Kunststoffflaschen hergestellt, die dann in der gewünschten Art und auch bekannten Weise befüllt und dann verschlossen werden.

In den heutigen Abfülllinien müssen bis zu 30 000 oder mehr, teilweise sogar bis zu 70 000 oder mehr Preforms pro Stunde der Abfülllinie zugeführt werden. Dazu werden die Preforms aus einem Preformspeicher entnommen (dies geschieht regelmäßig maschinell) und über eine Förderstrecke dem bekannten Werkzeug zugeführt, welches letztlich aus dem Preform die Kunststoffflasche herstellt.

Damit genügend Preforms transportiert werden, werden diese zunächst auf ein erstes (hohes) Niveau angehoben und fallen/gleiten dann über ein Schienensystem - und ein zweites niedrigeres Niveau - kontrolliert in eine Förderbahn, wo die einzelnen Preforms vereinzelt der Weiterbearbeitung zugeführt werden. Die bisherige Förderung der einzelnen Preforms setzt mithin eine sehr große Bauhöhe voraus und bei den bekannten Fördereinrichtungen werden regelmäßig Bauhöhen von mehr als drei Meter, auch sechs Meter oder mehr erreicht. Dies erfordert entsprechende bauliche Einrichtungen auch in der Abfülllinie und nicht immer ist es möglich, die gewünschten hohen Bauhöhen auch zu erreichen, damit eine hinreichend lange Falllinie für die einzelnen Preforms gegeben ist.

Aufgabe der Erfindung ist es, die bisherigen Nachteile bei der Beförderung der Preforms und der Zuführung der Preforms in die Weiterverarbeitungslinie zu vermeiden und einen möglichst hohen Durchsatz von Preforms zu ermöglichen, vorzugsweise auch einen Durchsatz von mehr als 30 000 Preforms pro Stunde zu ermöglichen.

Die Erfindung wird mit einer Fördereinrichtung mit den Merkmalen nach Anspruch 1 gelöst. Vorteilhafte Weiterbildungen sind in den Unteransprüchen und der weiteren Offenbarung beschrieben.

Bei der erfindungsgemäßen Lösung werden die Preforms über einen im Wesentlichen horizontal angeordneten Förderkanal transportiert und die Kraft zur Beförderung ist nicht mehr wie im Stand der Technik die Schwerkraft, die auf die Preforms einwirkt, sondern die Kraft, die durch ein Gebläse, welche Luft in einen Förderkanal einbläst, aufgebracht wird. Da der Querschnitt des Förderkanals im Wesentlichen der äußeren Kontur der Preform angepasst ist und das Preform während des Transports im Wesentlichen vertikal ausgerichtet ist, können die einzelnen Preforms mit sehr hoher Geschwindigkeit durch die Fördereinrichtung transportiert werden, um sie somit einer Weiterverarbeitungseinrichtung der Abfülllinie zuzuführen.

Die Erfindung ist nachstehend beispielhaft näher erläutert.
- Fig. 1: zeigt einen Querschnitt über eine erfindungsgemäße Fördereinrichtung;
- Fig. 2: zeigt eine Seitenansicht einer erfindungsgemäßen Fördereinrichtung;
- Fig. 3: zeigt eine Ansicht, wie das zu befördernde Behältnis während des Transports zum Förderkanal ausgerichtet ist;
- Fig. 4: zeigt eine weitere Querschnittsansicht einer erfindungsgemäßen Fördereinrichtung;
- Fig. 5: zeigt eine weitere Seitenansicht der erfindungsgemäßen Fördereinrichtung;
- Fig. 6: zeigt eine Aufsicht auf eine erfindungsgemäße Fördereinrichtung im Bereich des Einlasses für die zu befördernden Behältnisse;
- Fig. 7: zeigt eine Ansicht einer erfindungsgemäßen Fördereinrichtung, die neben einem linearen Abschnitt auch einen Kurvenabschnitt aufweist;
- Fig. 8: zeigt ein typisches zu beförderndes Behältnis in Form eines Preforms;
- Fig. 9: zeigt eine Obenaufsicht einer erfindungsgemäßen Fördereinrichtung;
- Fig. 10: zeigt eine weitere Querschnittdarstellung einer erfindungsgemäßen Fördereinrichtung;
- Fig. 11: zeigt eine weitere Seitenansicht einer erfindungsgemäßen Fördereinrichtung;
- Fig. 12: zeigt einen Querschnitt durch die Darstellung gemäß Fig. 11 gemäß der Linie g-*g*;
- Fig. 13: -zeigt ein vergrößertes Detail H aus Fig. 12;
- Fig. 14: zeigt eine perspektivische Ansicht der Einrichtung gemäß Fig. 11;
- Fig. 15: zeigt eine Schnittdarstellung gemäß der Linie *j-j* nach Fig. 11;
- Fig. 16: zeigt eine Schnittdarstellung gemäß der Linie *k-k* nach Fig. 11;
- Fig. 17: zeigt einen weiteren Querschnitt durch eine erfindungsgemäße Fördereinrichtung;
- Fig. 18: zeigt eine weitere Seitenansicht einer erfindungsgemäßen Fördereinrichtung;
- Fig. 19: zeigt einen Ausriss des Details H in Fig. 17;
- Fig. 20: zeigt eine Schnittdarstellung gemäß der Linie d-d in Fig. 18;
- Fig. 21: zeigt den Ausriss E in Fig. 20;
- Fig. 22: zeigt eine weitere perspektivische Ansicht einer erfindungsgemäßen Fördereinrichtung; und
- Fig. 23: zeigt einen Querschnitt gemäß der Schnittlinie g-g in Fig. 18.

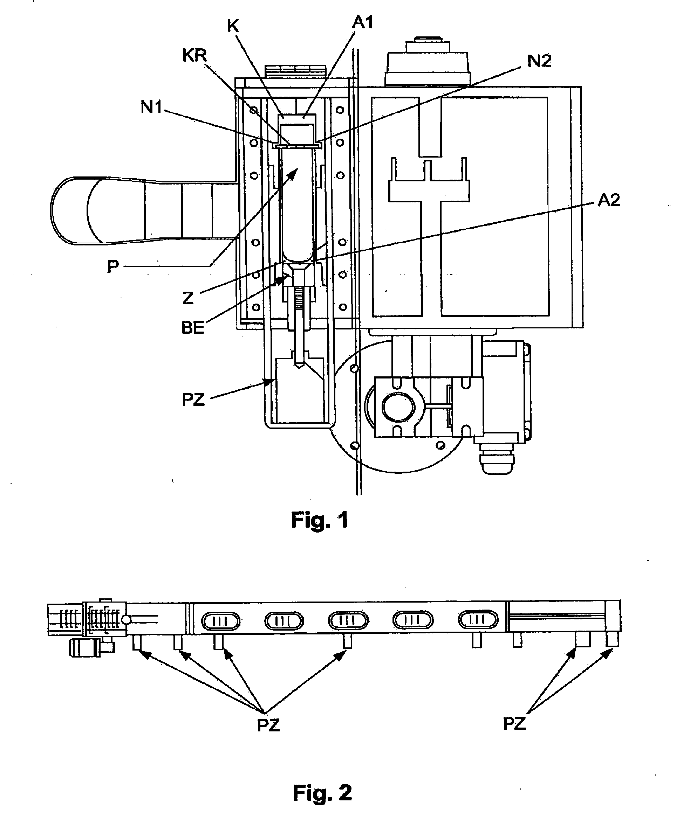

**Fig. 1** zeigt den Querschnitt einer erfindungsgemäßen Fördereinrichtung, welche zwei Seitenwände sowie ein Bodenelement und ein Dachelement aufweist. Wand-, Dach- und Bodenelemente geben einen Querschnitt frei, welcher hinsichtlich seiner Breite an die Breite des zu transportierenden Preforms P angepasst ist, wobei während des Transports das Preform P in einem lichten Maß, also ohne unnötige Reibung an den Seitenwänden des Förderkanals (Förderstrecke) K durch diesen transportiert werden kann. Somit ist die gesamte Förderstrecke, also der Förderkanal K, im Querschnitt geschlossen. Im oberen Bereich weist der Förderkanal K zwei sich gegenüberliegende Nuten N1, N2 auf, mit welchen während des Transports das Preform P, welches einen umlaufenden Kragen (Rand) KR aufweist, zur Anlage kommt. Dieser umlaufende Kragen KR des Preforms P ist meistens vom Durchmesser her größer als der Durchmesser des Preforms P.

Wie in Fig. 1 weiter zu erkennen ist, ist das Bodenelement (höhenverstellbare Bodenschiene) BE des Förderkanals K der Fördereinrichtung bevorzugt hinsichtlich seiner Höhe einstellbar, so dass der Raum R zwischen dem Boden des Förderkanals K und der Unterseite des zu transportierenden Behältnisses individuell einstellbar ist. Wie in Fig. 1 auch zu erkennen, ist zwischen der Oberseite des Behältnisses und dem Dachelement ein erster Abstand A1 ausgebildet, während zwischen der Unterseite des zu befördernden Behältnisses und dem Bodenelement BE ein zweiter Abstand A2 ausgebildet ist. Durch die Höhenverstellung des Bodenelements BE kann somit auch das Verhältnis des ersten Abstandes A1 (und der dort aufgebrachten Kraft auf dem Behältnis) zum zweiten Abstand A2 (und der dort aufgebrachten Kraft auf dem Behältnis) individuell eingestellt werden, damit beim Transport das Behältnis in der vertikalen Ausrichtung verbleibt.

Im gezeigten Beispiel ist das Bodenelement BE als Bodenschiene ausgebildet, welche durch einen Antrieb PZ, z. B. einen Pneumatikzylinder, in der Höhe verstellbar ist, um somit auf das zu befördernde Behältnis angepasst zu werden.

**Fig. 2** zeigt eine Seitenansicht der erfindungsgemäßen Fördereinrichtung. Hierbei sind insbesondere die jeweiligen Antriebe PZ für die Bodenschiene BE zu erkennen.

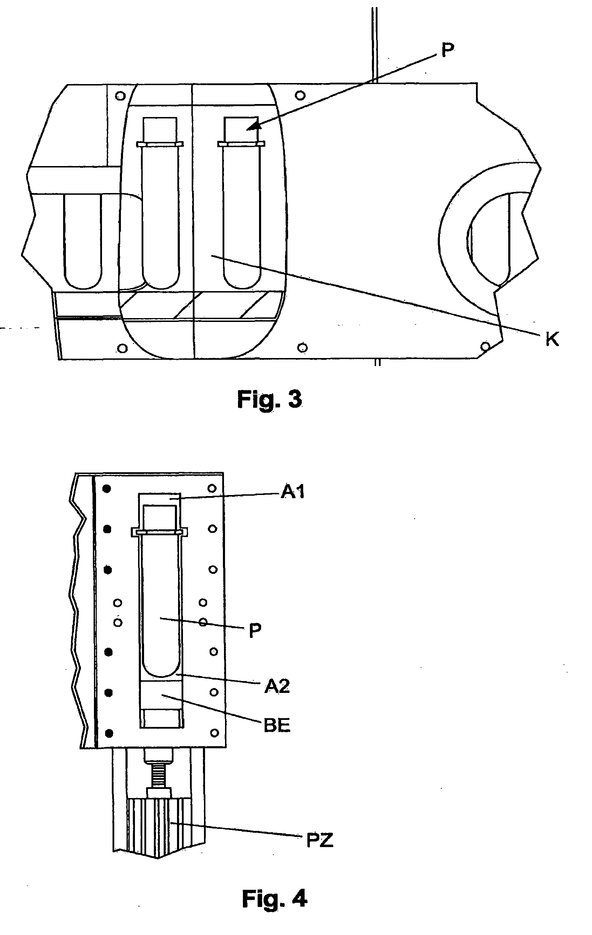

**Fig. 3** zeigt eine Querschnittansicht der erfindungsgemäßen Fördereinrichtung bzw. des Förderkanals K und dabei insbesondere die Ansicht des Preforms P während des Transports in der Förderstrecke K. Die einzelnen Preforms P werden in einer aufrechten Position durch die Förderstrecke K transportiert.

**Fig. 4** zeigt eine weitere Querschnittsansicht der erfindungsgemäßen Fördereinrichtung.

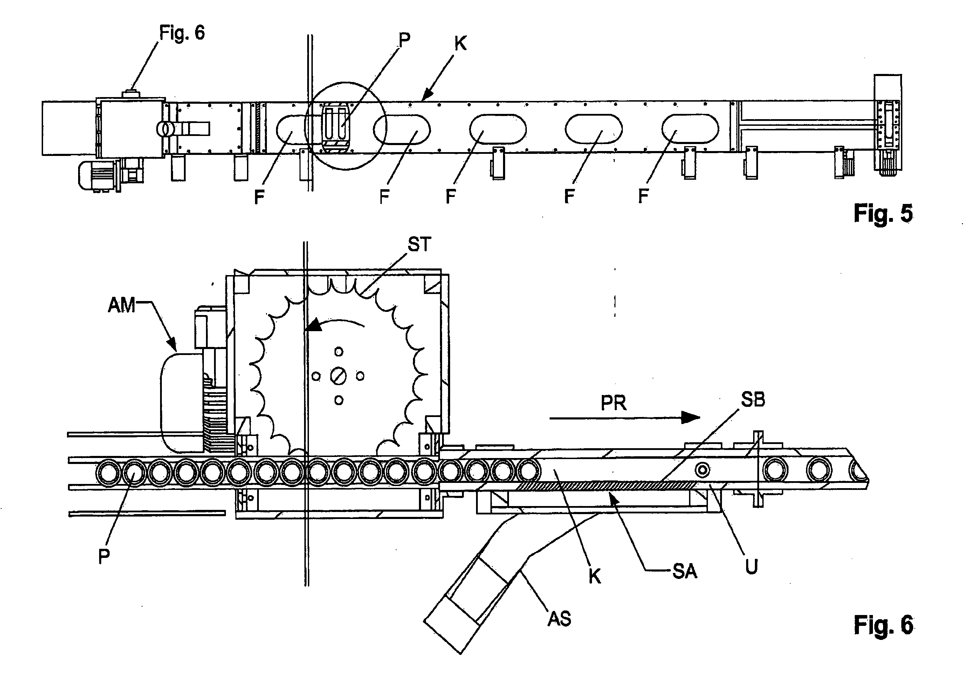

**Fig. 5** zeigt eine weitere Ansicht der erfindungsgemäßen Fördereinrichtung mit dem in Fig. 3 dargestellten Ausrissdetail mit der Darstellung der zu befördernden Preforms P. Schließlich sind auch in Fig. 5 Seitenfenster F zu erkennen, die in dem Förderkanal K eingelassen sind (durch die Fenster kann aber keine Luft entweichen), um somit auch dem Bedienpersonal der Abfülllinie einen Blick in die Fördereinrichtung bzw. in die Förderstrecke K zu ermöglichen.

Die gesamte Förderstrecke ist, wie auch den Figuren 1, 3 und 4 zu entnehmen, ein geschlossenes System, insbesondere der Kanal K besteht aus einem geeigneten Material (z.B. Kunststoff oder Edelstahl), welcher bevorzugt "FDA approved" ist, also lebensmitteltauglich ist, so dass bei Berührung des zu befördernden Preforms P mit der Kanalwandung keine Verunreinigungen zu befürchten sind, die den Genuss zum Beispiel eines Lebensmittels, welches später in das aus dem Preform P entstehende Behältnis eingebracht wird, beeinträchtigen.

**Fig. 6** zeigt in einer Aufsicht die erfindungsgemäße Fördereinrichtung im Bereich des Einlasses. Die zu befördernden Preforms P werden durch einen Stern ST (oder auch Zellenrad) in die Förderstrecke gedrückt. (Der Stern ST bzw. das Zellenrad ist mit einem entsprechenden Antrieb AM versehen. Aufgabe des Sterns ST ist, die Preforms P in der Strecke zu befördern, da am Streckenanfang - zwischen Eingang und Luftanschluss - eine leichter Gegendruck vorhanden ist). Nach der Einmündung der Preforms P in den Förderkanal K weist dieser einen seitlichen Anbau SA auf, welcher über einen Anschluss AS, z. B. einen Luftschlauch oder dergleichen, verfügt, welcher ein Gas, z. B. Luft, einbläst. In dem vorderen Bereich des Förderkanals K, dort, wo der Anbau SA ausgebildet ist, weist die Kanalwandung U schräge Bohrungen SB auf, durch die der Gasstrom schräg in den Kanal K eindringt und ein Preform P in diesem vorderen Bereich wird dann durch die eindringende Luft durch den Kanal K weiter geführt, nämlich in Laufrichtung PR (Pfeilrichtung).

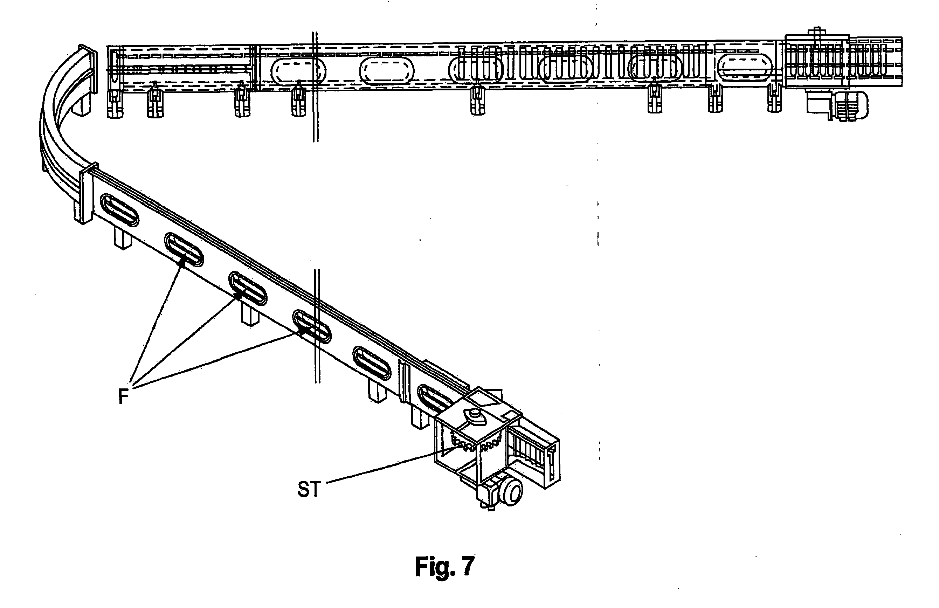

**Fig. 7** zeigt eine weitere erfindungsgemäße Ansicht der erfindungsgemäßen Fördereinrichtung mit einem linearen Abschnitt, welcher auch die erwähnten Sichtfenster F aufweist, welche bevorzugt aus einer Polycarbonat-Abdeckung bestehen. Im vorderen Bereich ist zu erkennen, dass die zu transportierenden Preforms P von einem Sortierer bzw. von einem Bunker (in dem die Preforms P noch ungeordnet liegen) in den Bereich des Fördersterns/Zellenrades ST in einen Förderkanal K eingeführt werden.

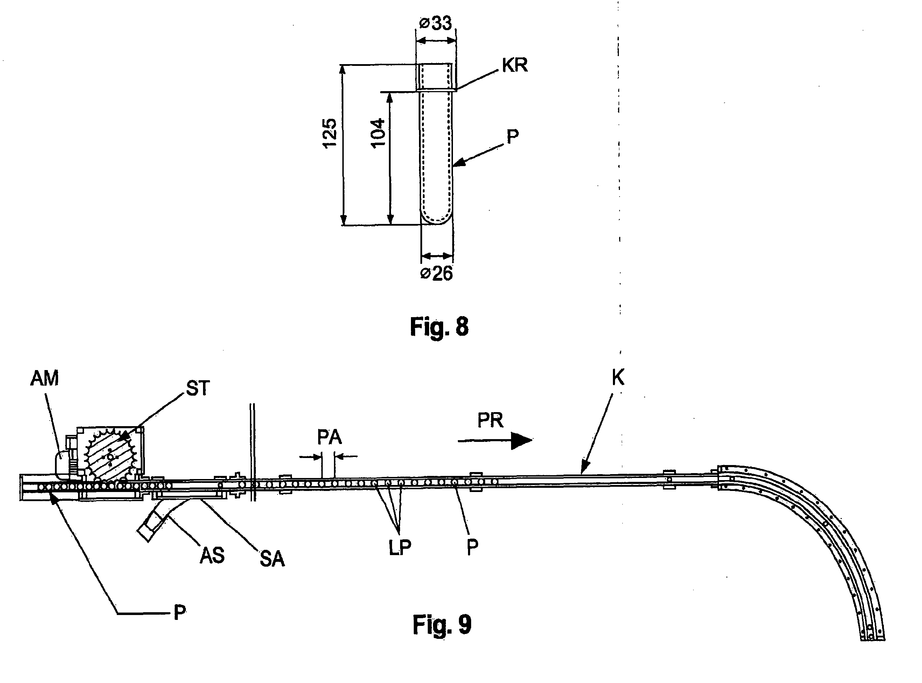

**Fig. 8** zeigt die typische Form und die typischen Abmaße eines typischen Preforms P.

**Fig. 9** zeigt die Obenaufsicht im Querschnitt einer erfindungsgemäßen Fördereinrichtung. Hierbei ist zu erkennen, dass nach Erfassen des zu transportierenden Preforms P durch den eingeblasenen Luftstrom in den Förderkanal K die Preforms P nicht nur in aufrechter (vertikaler) Ausrichtung, sondern dass eine Vielzahl von zu transportierenden Preforms P gleichzeitig transportiert wird und die Preforms P dabei einen Abstand PA zueinander aufweisen, so dass sie sich während des Transports nicht berühren bzw. berühren müssen.

Zwischen den einzelnen Preforms P baut sich dabei ein Luftpolster LP auf, so dass dann, wenn das vorlaufende Preform P gestoppt wird, das nachfolgende relativ sanft auf das vordere aufschließt. Die einzelnen Luftpolster LP haben aber auch die Funktion, dass die durch die Luft eingeblasene Kraft sich zwischen den einzelnen Preforms P durch das Luftpolster LP vom hinteren bis zum vorderen Preform P fortsetzt und die einzelnen Preforms P nicht nur einen anfänglichen "Stoß" mit einer anfänglichen Geschwindigkeit V0 erhalten, sondern auch während des Transports noch weiter in Transportrichtung eine Antriebskraft erfahren.

Der besondere Vorteil der erfindungsgemäßen Fördereinrichtung besteht darin, dass sie im Vergleich zum Stand der Technik keine besonders hohe Bauhöhe aufweisen muss, sondern dass der gesamte Transport im Wesentlichen auf einer linearen, horizontal ausgerichteten Wegstrecke erfolgt und dabei können über die Einstellung des Luftgebläses sehr hohe Transportgeschwindigkeiten für die einzelnen zu transportierenden Preforms erreicht werden, so dass auch Durchsatz-Zahlen von mehr als 30 000 oder gar 60 000 bis 70 000 Preforms, also Preforms pro Stunde, erreicht werden können.

Optional können an dieser Fördereinrichtung verschiedene Zusatzmodule, zum Beispiel lonisatoren oder UVC Bestrahlung zur Keimverringerung oder Einrichtungen zum Überkopfhalten der Preforms (vergl. DE 10 2008 034 232) integriert werden.

Nach dem Transport der Preforms P durch die erfindungsgemäße Fördereinrichtung werden die Preforms P bevorzugt einer Wendeeinrichtung zugeführt, wie sie in der Patentanmeldung DE 10 2008 034 232 offenbart ist.

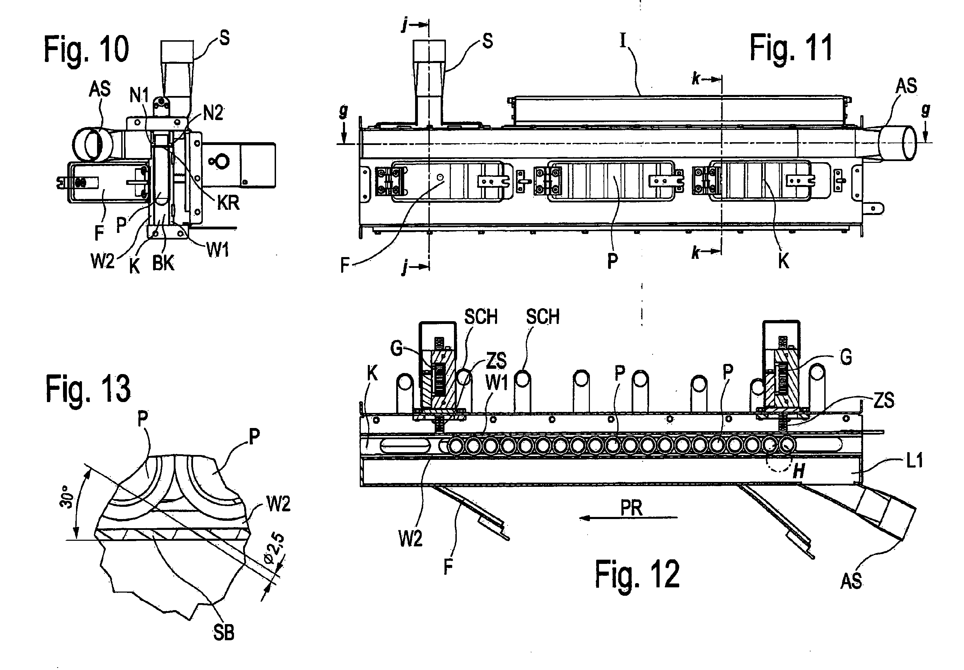

**Fig. 10** zeigt eine weitere Ausführung einer erfindungsgemäßen Fördereinrichtung im Querschnitt. Dabei ist insbesondere zu erkennen, dass eine Seitenwand W2 des Förderkanals K feststeht, während die andere gegenüberliegende Seitenwand W1 zwar parallel zu der feststehenden Seitenwand W2 ausgerichtet ist, jedoch auf diese feststehende Seitenwand W2 zu oder davon weg bewegbar ist, um somit die Breite BK des Förderkanals K auf das entsprechende Behältnis, im dargestellten Beispiel ein Preform P, exakt einstellen zu können.

Das Preform P selbst ist wiederum wie in den voran gezeigten Beispielen mit einem Kragen KR ausgestattet, mit dem es entsprechend gegenüber den Nuten N1, N2 der beiden Seitenwände W1, W2, die den Förderkanal K begrenzen, zur Anlage kommt.

Darüber hinaus ist ein Schlauchanschluss-Stutzen S zu erkennen, durch welchen Luft angesaugt werden kann, auch um Partikel, die sich eventuell in dem Preform P oder in dem Preform-Kanal K befinden, abzusaugen. Ferner ist ein weiterer Schlauchanschluss-Stutzen AS erkennbar, durch den die Luft, die später abgesaugt wird, hineingedrückt wird, um somit Luft in den Bereich des Preforms P bzw. des Preform-Kanals K zu drücken, die dann durch den Schlauchanschluss-Stutzen S abgesaugt wird und durch die starken Wirbel können Partikel aufgewirbelt werden und sicher abgeführt werden.

Auch sind in Fig. 10 Sichtfenster F zu erkennen, welche sich verschließen bzw. öffnen lassen, damit Wartungspersonal Zugriff zur Förderstrecke erhält.

**Fig. 11** zeigt eine Seitenansicht der erfindungsgemäßen Preform-Förderstrecke gemäß Fig. 10.

Sehr gut zu erkennen sind wiederum die Seitenfenster F, der Schlauchanschluss-Stutzen S, der Schlauchanschluss-Stutzen AS sowie die Preform-Behältnisse P. Oberhalb des Preform-Kanals K ist ein Ionisierer I ausgebildet, welcher dazu dient, die Luft innerhalb des Preform-Kanals K zu ionisieren.

**Fig. 12** zeigt den Schnitt durch Fig. 11 gemäß der Linie g-g.

Besonders gut ist zu erkennen, dass sich der Preform-Kanal K in seiner Breite exakt bestimmen lässt, um somit einen sicheren Transport des Preforms P bei minimalstem Lufteinsatz zu ermöglichen.

Die verschiebbare Wand W1, die der festen Wand W2 gegenüberliegt, kann mittels Zahnstangen ZS, Schiebestangen o.dgl. auf die gewünschte Stellung verschoben werden. Die Verstellung der Wand erfolgt mittels eines Zahnkranzgetriebes G, welches über ein weiteres Zahnrad (Zahnkranz) verfügt, welches in Zähne der Zahnstange ZS exakt eingreift.

Auch sind in dieser Figur Schieber SCH zur Regulierung der Abluft zu sehen.

**Fig. 13** zeigt den Ausschnitt H aus Fig. 12. Die Darstellung dient insbesondere dazu, in besserer Form die schräg angeordneten Lufteintrittsbohrungen SB zu zeigen. Diese Lufttrittsbohrungen SB bilden die Ausgänge der Lufteintrittskammer L1 (siehe Fig. 12), in die die Druckluft durch den Schlauchanschluss-Stutzen AS gepresst wird, um somit durch die Kraft der eintretenden Luft eine Fortbewegung auf die Preforms P in Laufrichtung der Preforms auszuüben.

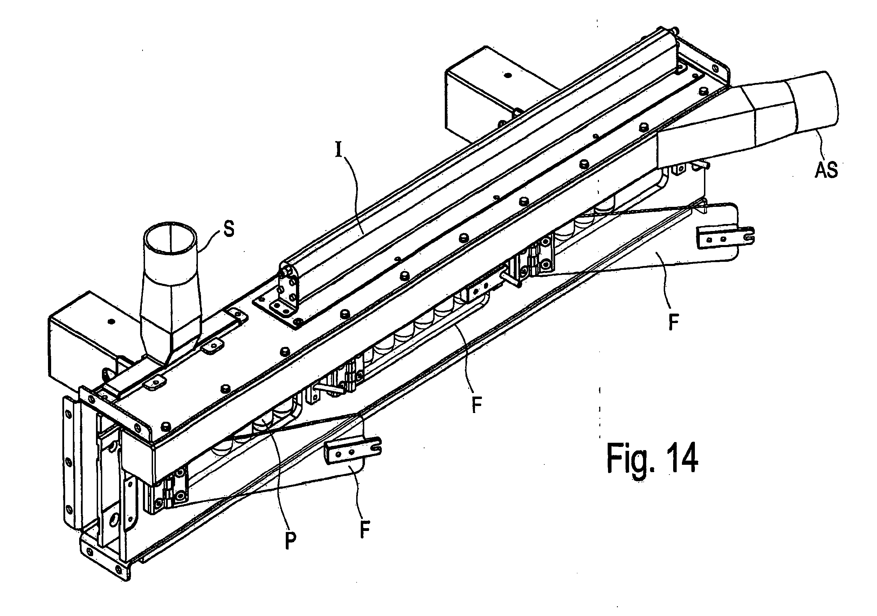

**Fig. 14** zeigt eine weitere perspektivische Ansicht der Einrichtung gemäß der Fig. 10 bis 13, 15 und 16.

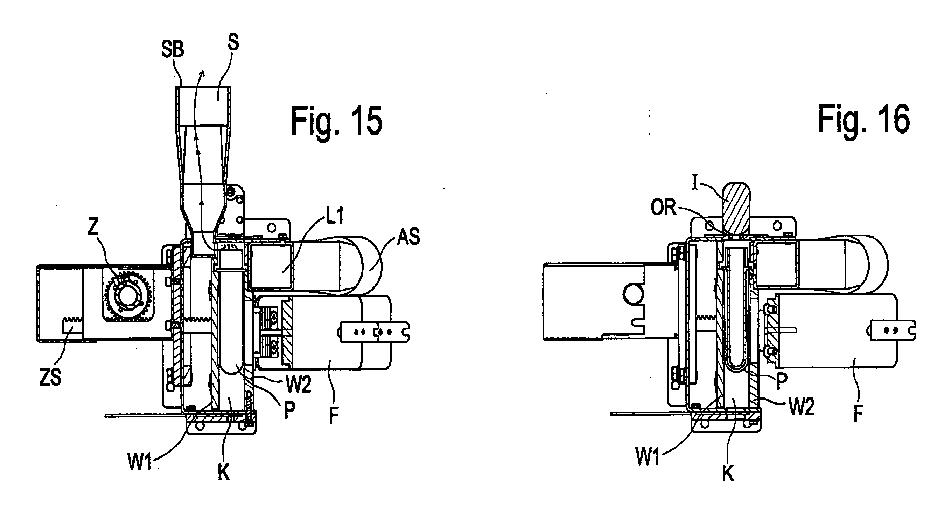

**Fig. 15** zeigt ein vergrößertes Detail gemäß der Linie *j-j* in Fig. 11. Besonders gut zu erkennen ist der Aufbau des Zahnrads Z und der mit ihm in Eingriff stehenden Zahnstange ZS zur gewünschten Verschiebung der beweglichen Wand W1. Auch ist sehr gut zu erkennen, dass die Luft, die durch den Schlauchanschluss-Stutzen AS in die Kammer L1 gedrückt wird, die dann die Kammer L1 durch die schrägen Lufteintrittsöffnungen SB des Preform-Kanals K erreicht, dort Luft auch aus dem Inneren der Preforms P mit aufwirbelt und somit etwaige Partikel, die sich in dem Preform P befinden, mit aufwirbelt, die dann durch den Schlauchanschluss-Stutzen S abgesaugt werden können.

**Fig. 16** zeigt wiederum einen Querschnitt gemäß der Linie k-k in Fig. 11 und dabei ist insbesondere gut zu erkennen, dass der lonisierer I direkt oberhalb des Preform-Kanals K und auch somit oberhalb der Preforms P liegt und mittels eines O-Rings OR gegenüber dem Preform-Kanal K abgedichtet ist. Mittels des lonisierers I wird die Luft in dem Bereich der Preform-Förderstrecke ionisiert.

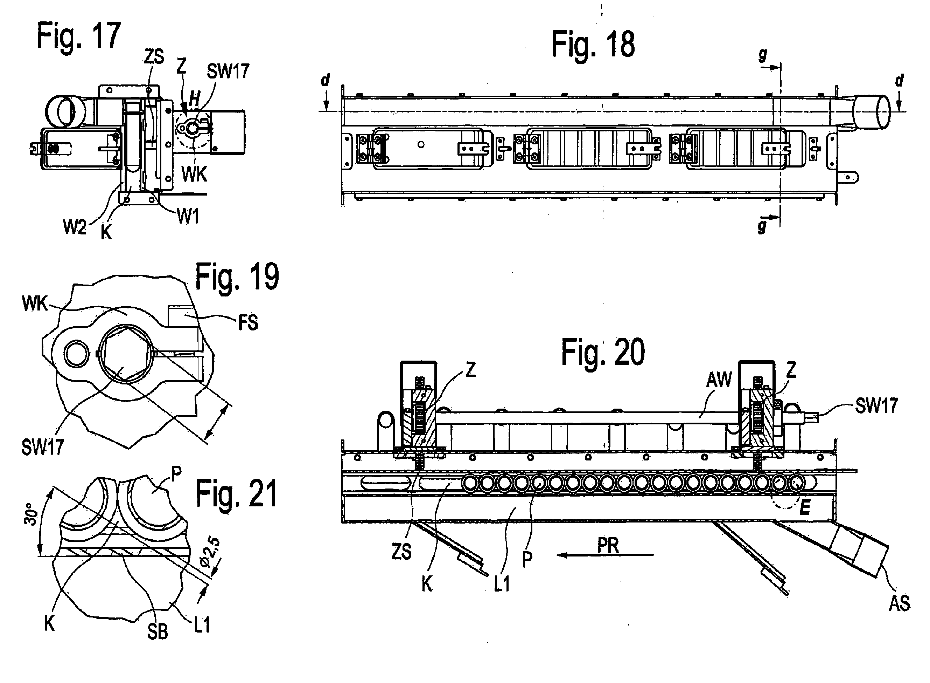

**Fig. 17** zeigt weitere Details der erfindungsgemäßen Preform-Einrichtung, insbesondere mit einer Wellenklemme WK, zur Sicherung der Einstellung der verschiedenen Formate. Preforms gibt es nämlich in den verschiedensten Höhen und insbesondere in den verschiedensten Breiten und nach Lösen der Wellenklemme WK kann mittels eines Schraubschlüssels an die Schraube SW17 angegriffen werden, um das Zahnrad Z zu verdrehen, um somit die Zahnstange ZS in die gewünschte Position zu bringen, damit der Preform-Kanal K den exakt gewünschten Abstand hat durch Einstellen des Abstandes zwischen der beweglichen Wand W1 und der festen Wand W2.

**Fig. 18** zeigt eine weitere Ansicht der zuvor beschriebenen Preform-Fördereinrichtung.

**Fig. 19** zeigt den Ausriss Haus Fig. 17. Hier ist auch eine Feststellschraube FS zu erkennen, mittels der die Wellenklemme WK auf der Schraube SW17 befestigt wird, um damit die gesamte Einrichtung bzw. den exakten Abstand der beiden Wände W1 und W2 festzusetzen.

**Fig. 20** zeigt nochmals einzelne Details der erfindungsgemäßen Fördereinrichtung, wobei zu erkennen ist, dass eine zentrale Antriebswelle AW die Zahnräder Z verbinden kann, so dass mit einer zentralen Schraube SW17 die gesamte Wandeinstellung erfolgen kann.

**Fig. 21** zeigt ein weiteres Detail der erfindungsgemäßen Fördereinrichtung gemäß Ausschnitt *E* aus Fig. 20.

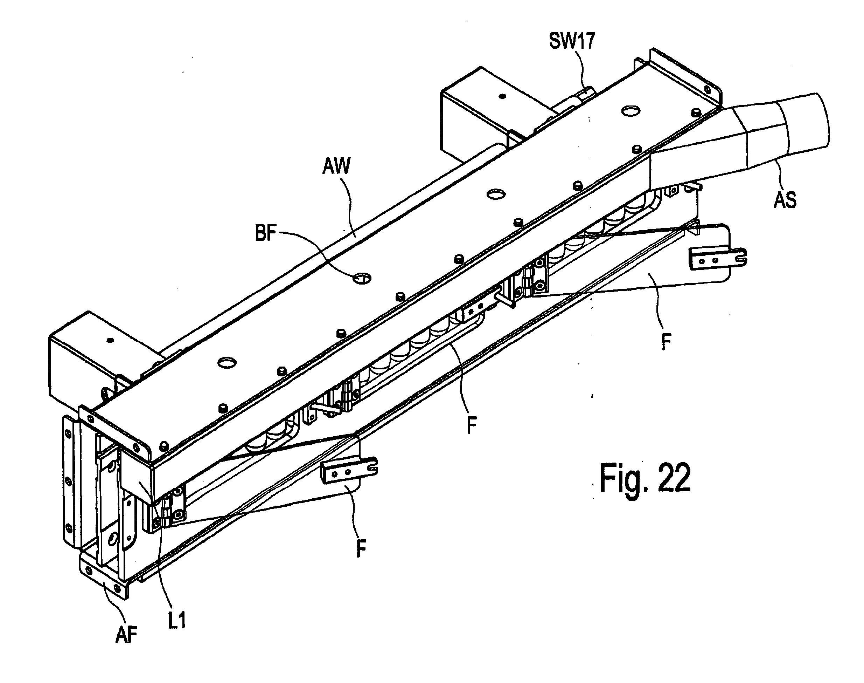

**Fig. 22** zeigt eine weitere perspektivische Ansicht, wobei im vorderen Bereich der Anschlussflansch AF für die Verlängerung der Förderstrecke bzw. die Übergabe zur Weiterverarbeitung der Preforms zu erkennen ist. Die Fenster F bilden die bereits beschriebenen Wartungsklappen. Die Fenster F sind wie erwähnt sowohl zu öffnen als auch zu schließen und können beim Verschließen durch Schraubverschlüsse oder Schnappverschlüsse o.dgl. in der Verschlusslage gehalten werden. Wie auch zu erkennen ist, ist die Antriebswelle AW zu sehen und auf der Oberseite sind in den Deckel des Förderkanals Bohrungen BF eingelassen, um Füllstandsensoren (nicht dargestellt) anzubringen. Diese Füllstandsensoren können messen, wie viele Preforms P sich in dem Förderkanal K befinden.

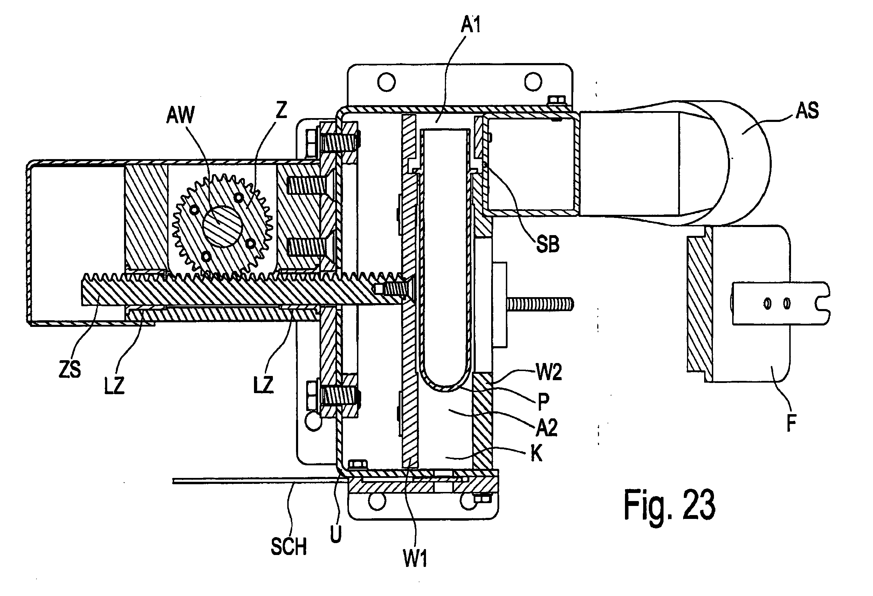

**Fig. 23** zeigt nochmals einen vergrößerten Ausriss der erfindungsgemäßen Preform-Förderstrecke und somit auch einen Querschnitt gemäß der Linie g-g von Fig. 18.

Besonders gut zu erkennen ist, dass die feststehende Wand W2 mit einer umbauten Wandung U verbunden ist, durch welche die Zahnstange ZS ragt, um die verstellbare Wand W1 auf den gewünschten Abstand zur festen Wand W2 einzustellen. An der Umbauung U ist auch die gesamte Einrichtung zur Feststellung der Wand, also die Zahnstange ZS, die Antriebswelle AW, das Zahnrad Z und die Lagerung LZ der Zahnstangen und weitere Details (Schrauben etc.), wie in Fig. 13 dargestellt, befestigt.

### Bezugszeichenliste

- A1: erster Abstand
- A2: zweiter Abstand
- AF: Anschlussflansch
- AM: Antrieb
- AS: Anschluss, Schlauchanschluss-Stutzen
- AW: Antriebswelle
- BE: Bodenelement
- BF: Bohrung für Füllstandssensor
- BK: Breite des Förderkanals
- F: Fenster
- FS: Feststellschraube
- G: Zahnkranzgetriebe
- I: lonisierer
- K: Förderkanal, Förderstrecke
- KR: Kragen
- L1: Lufteintrittskammer
- LP: Luftpolster
- LZ: Lagerung der Zahnstange
- N1: Nut
- N2: Nut
- OR: O-Ring
- P: Preform
- PA: Abstand
- PR: Laufrichtung
- PZ: Antrieb, Pneumatikzylinder
- R: Raum
- S: Schlauchanschluss-Stutzen
- SA: seitlicher Anbau
- SB: schräge Bohrung, Lufteintrittsbohrung
- SCH: Schieber
- ST: Stern, Zellenrad
- SW17: Schraube
- U: Wandung, Umbauung
- W1: bewegliche Seitenwand
- W2: feststehende Seitenwand
- WK: Wellenklemme
- Z: Zahnrad
- ZS: Zahnstange

## Patentansprüche

1. Fördersystem bestehend aus einer Fördereinrichtung zum Transport eines Preforms durch einen geschlossenen Förderkanal der Fördereinrichtung,
wobei das Preform (P) in einer aufrechten Position, d. h. mit dem Boden nach unten und der Öffnung nach oben transportiert wird,
wobei das Preform (P) einen Kragen (KR) aufweist, welcher sich im oberen Bereich des Preforms (P) befindet und, welcher einen Durchmesser aufweist, welcher größer ist als der Durchmesser des Preforms (P),
wobei der Förderkanal (K) einen Querschnitt aufweist, welcher der Außenkontur des Preforms (P) angepasst ist,
wobei der Förderkanal (K) gegenüberliegende Nuten (N1, N2) aufweist, in welchen das Preform (P) mit dem Kragen (KR) zur Anlage kommt und wobei in der Fördereinrichtung ein Gebläse ausgebildet ist, welches Gas in Transportrichtung in den Förderkanal (K) bläst und das Preform (P) durch das eingeblasene Gas durch den Förderkanal (K) transportiert wird,
dass der Förderkanal (K) Ventile zur Regulierung des Abluftstroms aufweist, die die Fortbewegung des Preforms (P) regulieren helfen,
wobei sich während des Transports der aufeinanderfolgenden Preforms (P) ein Luftpolster (LP) aufbaut, sodass dann, wenn das vorlaufende Preform (P) gestoppt wird, das nachlaufende Preform (P) relativ sanft auf das vordere aufschließt.

2. Fördersystem nach Anspruch 1,
**dadurch gekennzeichnet, dass** zur Volumenverringerung eine Bodenschiene (BE) im Querschnitt des Förderkanals (K) ausgebildet sein kann, welche durch einen Antrieb (PZ) in ihrer Position und damit vertikal verstellbar ist.

3. Fördersystem nach einem der vorhergehenden Ansprüche,
**dadurch gekennzeichnet, dass** ein Lufteintritt- (AS) und ein Luftaustritts-Stutzen (S) vorgesehen sind.

4. Fördersystem nach einem der vorhergehenden Ansprüche,
**dadurch gekennzeichnet, dass** im Bereich des Förderkanals (K), in dem die Luft des Gebläses in den Förderkanal (K) eintritt, der Förderkanal (K) Bohrungen (BF) aufweist, die die Wandung (U) des Förderkanals (K) in Richtung der Förderrichtung durchsetzen.

5. Fördersystem nach einem der vorhergehenden Ansprüche,
**dadurch gekennzeichnet, dass** der Förderkanal (K) aus Wänden (W1, W2) gebildet wird, die aus Edelstahl oder Kunststoffen bevorzugt "FDA approved" bestehen.

6. Fördersystem nach einem der vorhergehenden Ansprüche,
**dadurch gekennzeichnet, dass** der Förderkanal (K) Sichtfenster (F) aufweist.

7. Fördersystem nach einem der vorhergehenden Ansprüche,
**dadurch gekennzeichnet, dass** der Förderkanal (K) Öffnungen (SB) aufweist, die dem Austritt eines Luftstroms zur Beförderung des Preforms (P) dienen und die Zahl bzw. Durchmesser der Öffnungen (SB) so gewählt ist bzw. sind, dass gleichzeitig ein Vortrieb bei gleichzeitiger Reibungsverminderung und eine saubere Atmosphäre innerhalb des Bereichs der Preform-Öffnung erzielt wird.

8. Verfahren zur Beförderung eines Preforms in eine Fördereinrichtung nach den Ansprüchen 1-7,
wobei die Fördereinrichtung einen angeschlossenen Förderkanal (K) aufweist,
wobei das Preform (P) in einer aufrechten Position, d.h. mit dem Boden nach unten und der Öffnung nach oben transportiert wird,
wobei das Preform (P) einen Kragen (KR) aufweist, welcher größer ist, als der Durchmesser des Preforms (P),
wobei der Förderkanal (K) einen Querschnitt aufweist, welcher der Außenkontur des Preforms (P) angepasst ist,
wobei der Förderkanal (K) gegenüberliegende Nuten (N1, N2) aufweist, in welchen das Preform (P) mit dem Kragen (KR) zur Anlage kommt und
wobei ein Gebläse ausgebildet ist, welches Gas in Transportrichtung in den Förderkanal (K) bläst und das Preform (P) durch das eingeblasene Gas durch den Förderkanal (K) transportiert wird und sich dabei zwischen den einzelnen Preforms (P) ein Luftpolster (LP) aufbaut, sodass dann, wenn das vorlaufende Preform (P) gestoppt wird, das nachlaufende relativ sanft auf das vordere aufschließt.

## Claims

1. Conveying system consisting of a conveying apparatus for transporting a preform through a closed conveying channel of the conveying apparatus,
wherein the preform (P) is transported in an upright position, i.e. with the bottom downwards and the opening upwards,
wherein the preform (P) comprises a collar (KR) which is located in the upper region of the preform (P) and which has a diameter which is greater than the diameter of the preform (P),
wherein the conveying channel (K) has a cross-section which is adapted to the outer contour of the preform (P),
wherein the conveying channel (K) comprises mutually opposite grooves (N1, N2), in which the preform (P) comes to bear by means of the collar (KR), and wherein there is formed in the conveying apparatus a blower which blows gas in the transporting direction into the conveying channel (K) and the preform (P) is transported through the conveying channel (K) by the blown-in gas,
that the conveying channel (K) comprises valves for regulating the exhaust air flow, which help to regulate the progressive movement of the preform (P),
wherein an air cushion (LP) is built up during the transport of the successive preforms (P), so that when the preform (P) running ahead is stopped, the following preform (P) relatively gently closes up to the one ahead.

2. Conveying system according to Claim 1,
**characterised in that** for volume reduction a bottom rail (BE) can be formed in the cross-section of the conveying channel (K), which rail is adjustable in its position and thus vertically by a drive (PZ).

3. Conveying system according to one of the preceding claims, **characterised in that** an air inlet connecting piece (AS) and an air outlet connecting piece (S) are provided.

4. Conveying system according to one of the preceding claims, **characterised in that**, in the region of the conveying channel (K) in which the air of the blower enters the conveying channel (K), the conveying channel (K) comprises bores (BF) which pass through the wall (U) of the conveying channel (K) in the direction of the conveying direction.

5. Conveying system according to one of the preceding claims, **characterised in that** the conveying channel (K) is formed from walls (W1, W2) which are composed of stainless steel or plastics preferably "FDA approved".

6. Conveying system according to one of the preceding claims, **characterised in that** the conveying channel (K) comprises inspection windows (F).

7. Conveying system according to one of the preceding claims, **characterised in that** the conveying channel (K) comprises openings (SB) which serve for the exit of an air flow for conveying the preform (P), and the number and diameters of the openings (SB) is or are chosen such that simultaneously a propulsion with simultaneous friction reduction and a cleaner atmosphere inside the region of the preform opening is achieved.

8. Method for conveying a preform into a conveying apparatus according to Claims 1-7,
wherein the conveying apparatus comprises a connected conveying channel (K),
wherein the preform (P) is transported in an upright position, i.e. with the bottom downwards and the opening upwards,
wherein the preform (P) comprises a collar (KR) which is greater than the diameter of the preform (P),
wherein the conveying channel (K) has a cross-section which is adapted to the outer contour of the preform (P),
wherein the conveying channel (K) comprises mutually opposite grooves (N1, N2), in which the preform (P) comes to bear by means of the collar (KR) and
wherein there is formed a blower which blows gas in the transporting direction into the conveying channel (K) and the preform (P) is transported through the conveying channel (K) by the blown-in gas and an air cushion (LP) is built up during this between the individual preforms (P), so that when the preform (P) running ahead is stopped, the following one relatively gently closes up to the one ahead.

## Revendications

1. Système de convoyage constitué d'un dispositif de convoyage pour le transport d'une préforme à travers un conduit de convoyage fermé du dispositif de convoyage,
dans lequel la préforme (P) est transportée dans une position verticale, en d'autres termes avec le fond vers le bas et l'ouverture vers le haut,
dans lequel la préforme (P) présente un col (KR), qui se trouve dans la zone supérieure de la préforme (P), et qui présente un diamètre plus grand que le diamètre de la préforme (P),
dans lequel le conduit de convoyage (K) présente une section transversale, qui est adaptée au contour extérieur de la préforme (P),
dans lequel le conduit de convoyage (K) présente des rainures (N1, N2) se faisant face, dans lesquelles la préforme (P) vient en appui avec le col (KR), et sachant qu'une soufflante est réalisée dans le dispositif de convoyage, laquelle souffle du gaz dans la direction de transport dans le conduit de convoyage (K) et que la préforme (P) est transportée par le gaz soufflé à travers le conduit de convoyage (K),
dans lequel le conduit de convoyage (K) présente des soupapes servant à réguler le flux d'air sortant, qui participe à la régulation du déplacement de la préforme (P),
dans lequel un coussin d'air (LP) se forme au cours du transport de la préforme (P) qui suit, de sorte que, dès que la préforme (P) précédente est arrêtée, la préforme (P) suivante se verrouille relativement en douceur sur celle de devant.

2. Système de convoyage selon la revendication 1,
**caractérisé en ce qu'**un rail de fond (BE) peut être réalisé dans la section transversale du conduit de convoyage (K) aux fins de la réduction de volume, lequel rail peut être déplacé par un entraînement (PZ) dans sa position et ce faisant de manière verticale.

3. Système de convoyage selon l'une quelconque des revendications précédentes,
**caractérisé en ce que** sont prévues une tubulure d'entrée d'air (AS) et une tubulure de sortie d'air (S).

4. Système de convoyage selon l'une quelconque des revendications précédentes,
**caractérisé en ce que** le conduit de convoyage (K) présente, dans la zone du conduit de convoyage (K), dans laquelle l'air de la soufflante entre dans le conduit de convoyage (K), des alésages (BF), qui traversent la paroi (U) du conduit de convoyage (K) dans la direction de convoyage.

5. Système de convoyage selon l'une quelconque des revendications précédentes,
**caractérisé en ce que** le conduit de convoyage (K) est formé par des parois (W1, W2), qui sont constituées d'acier inoxydable ou de matières plastiques de préférence « FDA approved ».

6. Système de convoyage selon l'une quelconque des revendications précédentes,
**caractérisé en ce que** le conduit de convoyage (K) présente des fenêtres de contrôle visuel (F).

7. Système de convoyage selon l'une quelconque des revendications précédentes,
**caractérisé en ce que** le conduit de convoyage (K) présente des ouvertures (SB), qui servent à faire sortir un flux d'air servant à convoyer la préforme (P), et **en ce que** le nombre, respectivement le diamètre des ouvertures (SB) est choisi de telle manière qu'on obtient en même temps un avancement lors d'une réduction simultanée du frottement et une atmosphère propre à l'intérieur de la zone de l'ouverture de préforme.

8. Procédé pour convoyer une préforme dans un dispositif de convoyage selon les revendications 1 à 7,
dans lequel le dispositif de convoyage présente un conduit de convoyage (K) raccordé,
dans lequel la préforme (P) est transportée dans une position verticale, en d'autres termes avec le fond vers le bas et l'ouverture vers le haut,
dans lequel la préforme (P) présente un col (KR) qui est plus grand que le diamètre de la préforme (P),
dans lequel le conduit de convoyage (K) présente une section transversale, qui est adaptée au contour extérieur de la préforme (P),
dans lequel le conduit de convoyage (K) présente des rainures (N1, N2) se faisant face les unes les autres, dans lesquelles la préforme (P) vient en appui avec le col (KR), et
dans lequel une soufflante est réalisée, laquelle souffle du gaz dans la direction de transport dans le conduit de convoyage (K) et la préforme (P) est transportée par le gaz soufflé à travers le conduit de convoyage (K) et un coussin d'air (LP) se forme ce faisant entre les diverses préformes (P) de sorte que, dès que la préforme (P) précédente est arrêtée, la suivante se verrouille relativement en douceur sur celle de devant.
